# EUROPEAN PATENT SPECIFICATION

(11) **EP 4 057 758 B1**
(45) Date of publication and mention of the grant of the patent: **07.01.2026**
(21) Application number: 19951366.4
(22) Date of filing: 07.11.2019
(51) Int. Cl.: H04W 74/00, H04W 74/0833, H04W 74/0836, H04W 72/0453

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 14.09.2022
(73) Proprietor: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/043775
(87) International publication number: WO 2021/090461

(56) References cited:
- ZTE ET AL: "On 2-Step RACH Procedures", vol. RAN WG1, 30 March 2019 (2019-03-30), pages 1 - 10, XP051691124, Retrieved from the Internet <URL:http://www.3gpp.org/ftp/tsg%5Fran/WG1%5FRL1/TSGR1%5F96b/Docs/R1%2D1903879%2Ezip>
- HUAWEI ET AL.: "Discussion on 2-step RACH procedure", 3GPP TSG RAN WG1 #98B R1-1910032, 20 October 2019 (2019-10-20), XP051788839
- NTT: "Discussion on Channel Structure for Two-Step RACH", 3GPP TSG RAN WG1 #98B R1-1911155, 20 October 2019 (2019-10-20), XP051789928
- NTT: "Discussion on Channel Structure for Two-Step RACH", 3GPP TSG RAN WG1 #99 R1-1912869, 8 November 2019 (2019-11-08), XP051820217

## Description

### TECHNICAL FIELD

The present invention relates to a terminal, a base station and a communication method in a radio communication system.

### BACKGROUND ART

For 3GPP Release 16 NR, a study on 2-step RACH has been started. According to 2-step RACH, it is considered that time required for processing of random access channel (RACH) can be reduced and power consumption can be reduced.

The 2-step RACH procedure is performed with two steps. Specifically, a user equipment transmits MessageA to a base station. The base station transmits MessageB to the user equipment. Here, the MessageA is a message that is equivalent to Message1 + Message3 in a 4-step RACH procedure. Furthermore, the MessageB is a message that is equivalent to Message2 + Message4 in a 4-step RACH procedure.

### Related Art Document

### [Non-Patent Document]

Non-Patent Document 1: 3GPP TS 38.211 V15.4.0(2018-12)
ZTE ET AL: "On 2-Step RACH Procedures", 3GPP DRAFT; R1-1903879 and HUAWEI et al.: "Discussion on 2-step RACH procedure", 3GPP TSG RAN WG1 #98b R1-1910032 relate to the 2-step RACH procedure procedure, focusing on msgA content, msgB content, power control, fall back mechanism, and other related procedure issues.

### SUMMARY OF THE INVENTION

### [PROBLEM TO BE SOLVED BY THE INVENTION]

It is assumed that "MsgA PUSCH configuration" that is a set of parameters related to MessageA (MsgA) PUSCH transmission includes parameters related to MsgA PUSCH resource indication, a transmission method, transmission power control, correspondence between MsgA PRACH and MsgA PUSCH, and so forth.

There is a need for a method of flexibly configuring "MsgA PUSCH configuration" for a terminal.

### [MEANS FOR SOLVING THE PROBLEM]

The object of the invention is achieved by the subject-matter of the independent claims. Advantageous embodiments are defined in the dependent claim. Further examples are provided for facilitating the understanding of the invention. According to an aspect of the present invention, there is provided a terminal including a control unit that selects a set of configuration information related to a physical uplink shared channel transmission for a MessageA (MsgA PUSCH) in a two step random access procedure based on configuration information of an active uplink Bandwidth Part (BWP); and a transmitting unit that performs the MsgA PUSCH transmission by using the set of the configuration information selected by the control unit.

### [ADVANTAGE OF THE INVENTION]

According to an embodiment, there is provided a method of flexibly configuring "MsgA PUSCH configuration" for a terminal.

### BRIEF DESCRIPTION OF DRAWINGS

FIG. 1 is a configuration diagram of a communication system according to an embodiment.
   FIG. 2 is a diagram illustrating an example of a 4 step RACH (Contention based random access) procedure.
   FIG. 3 is a diagram illustrating an example of a 2 step RACH (Contention based random access) procedure.
   FIG. 4 is a flowchart illustrating an example of a method of proposal 1.
   FIG. 5 is a flowchart illustrating an example of a method of proposal 2.
   FIG. 6 is a diagram illustrating an example of a functional configuration of a terminal.
   FIG. 7 is a diagram illustrating an example of a functional configuration of a base station.
   FIG. 8 is a diagram illustrating a hardware configuration of a terminal and a base station.

### [EMBODIMENTS OF THE INVENTION]

Hereinafter, embodiments of the present invention are described with reference to the drawings. The embodiments described below are merely examples, and the embodiments to which the present invention is applied are not limited to the following embodiments.

The radio communication system according to the following embodiments is assumed to basically conform to New Radio (NR), but this is an example, and the radio communication system according to the embodiments may conform to a radio communication system other than NR (e.g., LTE) in whole or in part.

### (Overall System Configuration)

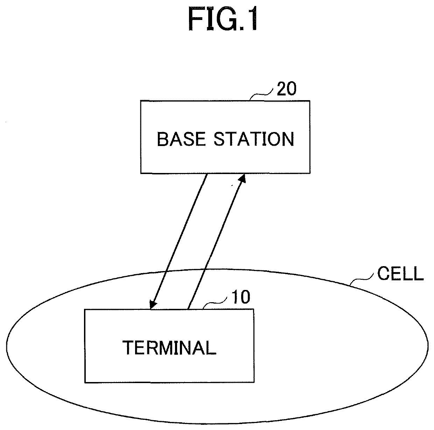

FIG. 1 illustrates a configuration diagram of a radio communication system according to the present embodiment. The radio communication system according to the embodiments includes a terminal 10 and a base station 20 as illustrated in FIG. 1. In FIG. 1, one terminal 10 and one base station 20 are illustrated. This is an example, and there may be a plurality of units of the terminal 10 and a plurality of the base stations 20.

The terminal 10 is a communication device having a radio communication function, such as a smartphone, a cellular phone, a tablet, a wearable terminal, and a communication module for M2M (Machine-to-Machine). The terminal 10 wirelessly connects to the base station 20 and utilizes various communication services provided by the radio communication system. The base station 20 is a communication device that provides one or more cells and wirelessly communicates with the terminal 10. Both the terminal 10 and the base station 20 are capable of transmitting and receiving signals by using beamforming. The terminal 10 may also be referred to as a UE, and the base station 20 may be referred to as a gNB.

In the embodiments, the duplex method may be a Time Division Duplex (TDD) method or a Frequency Division Duplex (FDD).

For the 3GPP release 16NR, a study on a 2-step RACH has been started. According to the 2-step RACH, the time required to process a random access channel (RACH) procedure can be reduced and the power consumption can be reduced.

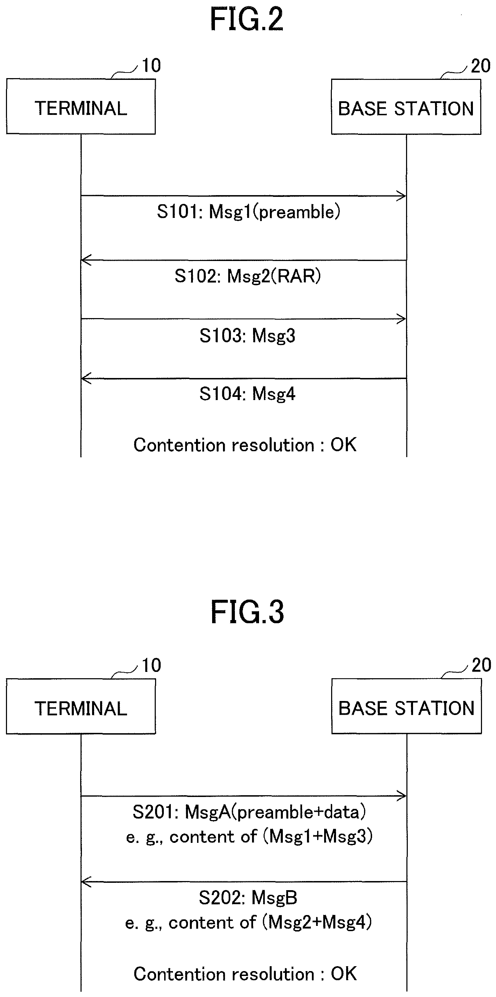

FIG. 2 illustrates an example of a typical 4-step RACH (Contention Based Random Access) procedure.

In the 4-step RACH procedure illustrated in FIG. 2, first, at step S101, the terminal 10 transmits a Message 1 (random access preamble) to the base station 20. At step S102, the base station 20 transmits a Message2 (random access response (RAR)) to the terminal 10. At step S103, the terminal 10 transmits the Message3 to the base station 20. At step S104, the base station 20 transmits the Message4 to the terminal 10.

FIG. 3 illustrates an example of a 2-step RACH (Contention Based Random Access) procedure.

In the 2-step RACH procedure illustrated in FIG. 3, the RACH procedure is performed in two steps. Specifically, at step S201, the terminal 10 transmits the MessageA to the base station 20. At step S202, the base station 20 transmits the Message B to the terminal 10. Here, MessageA is the message equivalent to Message1+Message3 in the 4-step RACH procedure illustrated in FIG. 2. MessageB corresponds to Message2+Message4 in the 4-step RACH procedure illustrated in FIG. 2.

MessageA includes a random access preamble and data sent by Physical Uplink Shared Channel (PUSCH). From a higher layer perspective, MessageA may be considered as a single message. From a physical layer perspective, however, it is assumed that, in MessageA, a random access preamble resource may be a separate resource from a PUSCH resource. In other words, the transmission of the Message A by the terminal 10 is assumed to be equivalent to the transmission of two signals, that is, the terminal 10 transmits a random access preamble and then, before receiving any message from the base station 20, transmits data (equivalent to the Message 3) on the PUSCH. As MessageA, the order of the random access preamble transmission timing and the PUSCH transmission timing may be reversed.

Currently, it is assumed that, in addition to the contention-based random access, contention free random access is to be adopted for the 2 step RACH procedure.

Details of the MessageA (MsgA) are currently discussed in the 3GPP. Basically, a preamble + a PUSCH is referred to as the MsgA. It is assumed that the preamble and the PUSCH are not integrated, at least, from the perspective of a physical layer. For example, it is assumed that transmissions of the preamble and the PUSCH having separated resources are collectively referred to as the MsgA.

A MsgA PUSCH occasion (MsgA PO) is a single MsgA PUSCH resource. Furthermore, a MsgA RACH occasion (MsgA RO) is a single MsgA preamble resource. The MsgA PUSCH occasion and the MsgA RACH occasion may be indicated as different resources.

It has been studied to define a correspondence relationship between a MsgA PUSCH and a MsgA RACH (the correspondence of which Msg PUSCH is transmitted by the terminal 10 that has transmitted the MsgA RACH). As the correspondence relationship, detailed correspondence has been studied, including one-to-one, many-to-one, one-to-many, and many-to-many.

A MsgA PUSCH configuration is a set of configuration information related to a MsgA PUSCH. For example, the MsgA PUSCH configuration may include configuration information related to a MsgA PUSCH, such as information on time and frequency domain resources for transmission of a MsgA PUSCH, Modulation Coding Scheme (MCS) and a transmission method (e.g., whether hopping is applied). The MsgA PUSCH configuration may be, for example, a set of parameters associated with the transmission of MsgA PUSCH. For example, the base station 20 may be able to configure a plurality of MsgA PUSCH configurations for the terminal 10. In this case, the terminal 10 may select one configuration of the plurality of MsgA PUSCH configurations (e.g., based on the selection criteria) and perform the 2-step RACH procedure using the selected MsgA PUSCH configuration.

For example, in the case of MsgA retransmission or the like, the terminal 10 may select the MsgA PUSCH configuration used for the previous transmission of MsgA or a different MsgA PUSCH configuration.

The maximum number of MsgA PUSCH configurations that can be configured for the terminal 10 may be two if the Radio Resource Control (RRC) state of the terminal 10 is an RRC_IDLE/INACTIVE state. When the RRC state of the terminal 10 is RRC CONNECTED state, the number of MsgA PUSCH configurations configurable for the terminal 10 may be two per Uplink Bandwidth Part (UL BWP).

### (Problem)

In connection with configuring the MsgA PUSCH configuration to the terminal 10, for example, the MsgA PUSCH configuration that has been configured for the terminal 10 when the RRC state of the terminal 10 has been the RRC_IDLE/INACTIVE state can be configured for the terminal 10 when the RRC state of the terminal 10 is the RRC CONNECTED state.

For example, when the RRC state of the terminal 10 is an RRC CONNECTED state, a MsgA PUSCH configuration configured for a UL BWP can be configured for another UL BWP.

However, as described above, configuring the MsgA PUSCH configuration multiple times for each RRC state and/or each UL BWP of the terminal 10 may increase the signaling overhead.

In addition, if up to two MsgA PUSCH configurations can be configured for each UL BWP of the terminal 10, the flexibility of the configuration of MsgA PUSCH configuration may be insufficient.

In connection with configuring the MsgA PUSCH configuration to the terminal 10, the terminal 10 may perform a 2-step RACH procedure using the MsgA PUSCH configuration configured for a predefined/preconfigured UL BWP, depending on the current active UL BWP configuration at the terminal 10.

### (Proposal 1)

In connection with configuring the MsgA PUSCH configuration to the terminal 10, if one or more MsgA PUSCH configurations are configured for the current active UL BWP at the terminal 10, and none of the configured MsgA PUSCH configurations meet the selection criteria (criteria), the terminal 10 transitions to a predefined/preconfigured UL BWP (applies the UL BWP predefined/preconfigured as the active UL BWP). The terminal 10 may execute the 2-step RACH procedure using a MsgA PUSCH configuration that meets the selection criteria if there is the MsgA PUSCH configuration that meets the selection criteria within the MsgA PUSCH configuration configured for the UL BWP after the transition.

The above criteria may be based on, for example, MsgA payload size, Reference Signal Received Power (RSRP), Reference Signal Received Quality (RSRQ), Signal-to-Interference plus Noise power Ratio (SINR), timing offset between MsgA RO and MsgA PO, Modulation and Coding Scheme (MCS), Transport Block Size (TBS), selected preamble index/MsgA RO, a combination of these, or another index.

A preconfigured/configured UL BWP may be an initial active UL BWP, an initial UL BWP, a default UL BWP, a first active UL BWP, a UL BWP used for RRC_IDLE/INACTIVE state, or another UL BWP.

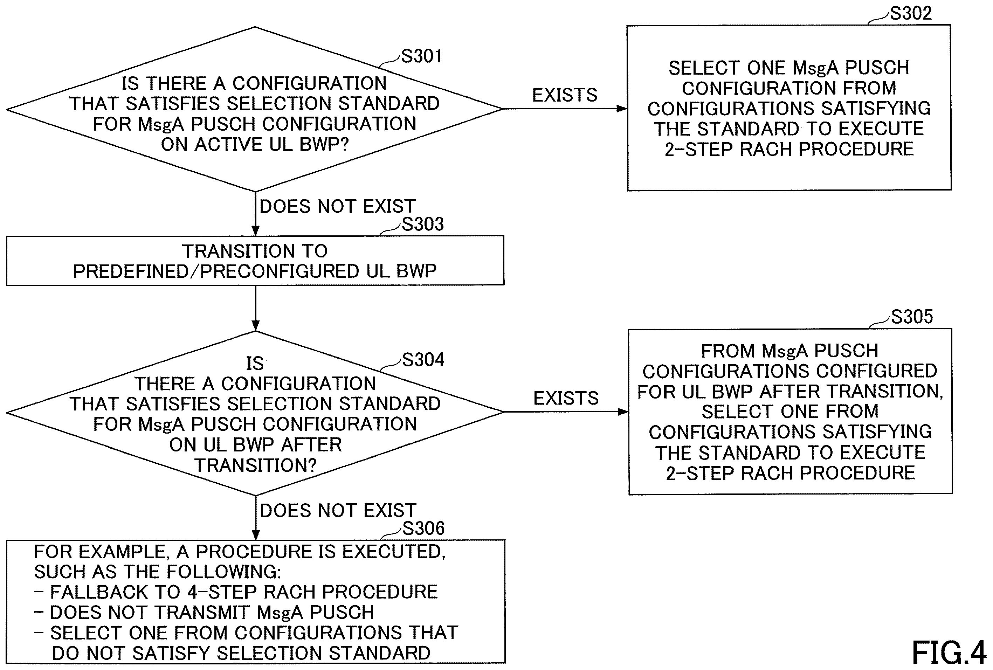

FIG. 4 is a flowchart illustrating an example of the method of Proposal 1. As illustrated in FIG. 4, in step S301, the terminal 10 determines whether there is a MsgA PUSCH configuration that meets the selection criteria in one or more MsgA PUSCH configurations configured for an active UL BWP.

If the terminal 10 determines in step S301 that there is a MsgA PUSCH configuration meeting the selection criteria, in step S302, the terminal 10 selects one MsgA PUSCH configuration from one or more MsgA PUSCH configurations meeting the selection criteria and performs the 2-step RACH procedure using the selected MsgA PUSCH configuration.

When the terminal 10 determines in step S301 that there is no MsgA PUSCH configuration meeting the selection criteria, in step S303, the terminal 10 transits to the predefined/preconfigured UL BWP.

Thereafter, in step S304, the terminal 10 determines whether a MsgA PUSCH configuration meeting the selection criteria is present in one or more MsgA PUSCH configurations configured for the UL BWP after transition.

If it is determined in step S304 that there is an MsgA PUSCH configuration meeting the selection criteria, in step S305, the terminal 10 selects one MsgA PUSCH configuration from one or more MsgA PUSCH configurations meeting the selection criteria and performs the 2-step RACH procedure using the selected MsgA PUSCH configuration.

If it is determined in step S304 that there is no MsgA PUSCH configuration meeting the selection criteria, in step S306, for example, the terminal 10 (i) may execute the 4-step RACH procedure instead of the 2-step RACH procedure, (ii) optionally does not transmit the MsgA PUSCH, or (iii) may select one MsgA PUSCH configuration from among one or more MsgA PUSCH configurations that do not meet the selection criteria.

### (Proposal 2)

In connection with configuring the MsgA PUSCH configuration to terminal 10, if one or more MsgA PUSCH configurations are configured for the current active UL BWP at terminal 10 and none of the configured MsgA PUSCH configurations meet the selection criteria (criteria), the terminal 10 may perform a 2-step RACH procedure on the current active UL BWP using some or all of the parameters of the MsgA PUSCH configuration configured for the predefined/preconfigured UL BWP.

The terminal 10 may interpret that the parameters of the MsgA PUSCH configuration configured for the predetermined/preconfigured UL BWP are parameters of the current active UL BWP, so that the parameters can be applied to the current active UL BWP, or may apply without interpretation (e.g., frequency resource location).

For some parameters, the terminal 10 may use the parameters of MsgA PUSCH configuration configured for a predefined/preconfigured UL BWP, and, for other parameters, the terminal 10 may use the parameters of the MsgA PUSCH configuration configured for the current active UL BWP.

The terminal 10 may use resources, in the 2-step RACH procedure, that are same as the MsgA PUSCH resources of the predefined/preconfigured UL BWP in the frequency direction if the predefined/preconfigured UL BWP is completely included in the current active UL BWP.

The selection criteria described above may be based on, for example, MsgA payload size, RSRP, RSRQ, SINR, timing offset between MsgA RO and MsgA PO, MCS, TBS, selected preamble index/MsgA RO, a combination thereof, or another index.

The predefined/preconfigured UL BWP may be an initial active UL BWP, a default UL BWP, a first active UL BWP, a UL BWP used for RRC_IDLE/INACTIVE state, or any other UL BWP.

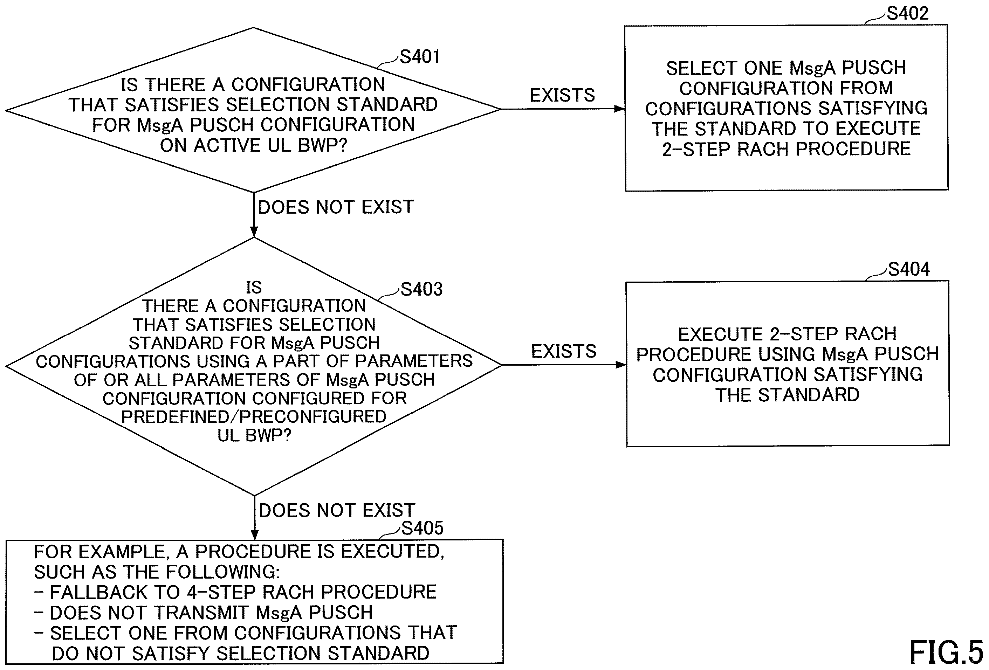

FIG. 5 is a flowchart illustrating an example of the method of Proposal 2. As illustrated in FIG. 5, in step S401, the terminal 10 determines whether a MsgA PUSCH configuration meeting the selection criteria exists in one or more MsgA PUSCH configurations configured for the active UL BWP.

If it is determined in step S401 that there is a MsgA PUSCH configuration meeting the selection criteria, in step S402, the terminal 10 selects one MsgA PUSCH configuration from one or more MsgA PUSCH configurations meeting the selection criteria and performs the 2-step RACH procedure using the selected MsgA PUSCH configuration.

When it is determined in step S401 that there is no MsgA PUSCH configuration meeting the selection criteria, in step S403, the terminal 10 determines whether a MsgA PUSCH configuration meeting the selection criteria exists in one or more MsgA PUSCH configurations using some or all of the parameters of one or more MsgA PUSCH configurations configured for a predefined/preconfigured UL BWP.

If it is determined in step S403 that there is a MsgA PUSCH configuration meeting the selection criteria, in step S404, the terminal 10 selects one MsgA PUSCH configuration from one or more MsgA PUSCH configurations meeting the selection criteria and performs the 2-step RACH procedure using the selected MsgA PUSCH configuration.

If it is determined in step S403 that there is no MsgA PUSCH configuration meeting the selection criteria, in step S405, for example, the terminal 10 (i) may execute the 4-step RACH procedure instead of the 2-step RACH procedure, (ii) optionally does not transmit the MsgA PUSCH, or (iii) may select one MsgA PUSCH configuration from among one or more MsgA PUSCH configurations not meeting the selection criteria.

### (Proposal 3)

In connection with configuring the MsgA PUSCH configuration for the terminal 10, if no MsgA PUSCH configuration is configured for the current active UL BWP at the terminal 10, the terminal 10 transitions to the predefined/preconfigured UL BWP (apply the predefined/preconfigured UL BWP as the active UL BWP). The terminal 10 may execute the 2-step RACH procedure using the MsgA PUSCH configuration that meets the selection criteria if there is a MsgA PUSCH configuration meeting the selection criteria within the MsgA PUSCH configuration configured for the UL BWP after the transition.

The above-described criteria may be based on, for example, MsgA payload size, Reference Signal Received Power (RSRP), Reference Signal Received Quality (RSRQ), Signal-to-Interference plus Noise power Ratio (SINR), timing offset between MsgA RO and MsgA PO, Modulation and Coding Scheme (MCS), Transport Block Size (TBS), selected preamble index/MsgA RO, a combination of these, or another index.

The predefined/preconfigured UL BWP may be an initial active UL BWP, an initial UL BWP, a default UL BWP, a first active UL BWP, a UL BWP used for RRC_IDLE/INACTIVE state, or any other UL BWP.

### (Proposal 4)

In connection with configuring MsgA PUSCH configuration for terminal 10, if no MsgA PUSCH configuration is configured for any currently active UL BWP at the terminal 10, the terminal 10 may perform a 2-step RACH procedure at the currently active UL BWP using some or all of the parameters of the MsgA PUSCH configuration configured for the predefined/configured UL BWP.

The terminal 10 may interpret that the parameters of the MsgA PUSCH configuration configured for the predetermined/preconfigured UL BWP are parameters of the current active UL BWP, so that the parameters can be applied to the current active UL BWP, or may apply the parameters of the MsgA PUSCH configuration configured for the predetermined/preconfigured UL BWP without interpretation **(e.g.,** frequency resource location).

For some parameters, the terminal 10 may use the parameters of MsgA PUSCH configuration configured for a predefined/preconfigured UL BWP, and, other parameters may be predefined/signaled.

The terminal 10 may use resources, in the 2-step RACH procedure, that are same as the MsgA PUSCH resources of the predefined/preconfigured UL BWP in the frequency direction if the predefined/preconfigured UL BWP is completely included in the current active UL BWP.

The predefined/preconfigured UL BWP may be an initial active UL BWP, an initial UL BWP, a default UL BWP, a first active UL BWP, a UL BWP used for RRC_IDLE/INACTIVE state, or any other UL BWP.

### (Proposal 5)

In connection with configuring the MsgA PUSCH configuration for the terminal 10, if only one MsgA PUSCH configuration is configured for the current active UL BWP at the terminal 10, the terminal 10 may configure the MsgA PUSCH configuration using some or all of the parameters of the MsgA PUSCH configuration configured for the predefined/configured UL BWP as another MsgA PUSCH configuration configured for the current active UL BWP, and the terminal 10 may perform the 2-step RACH procedure on the current active UL BWP.

That is, the terminal 10 may execute the 2-step RACH procedure using, for example, the MsgA PUSCH configuration selected by the selection criteria applied at the terminal 10, from among the MsgA PUSCH configurations using some or all parameters of the MsgA PUSCH configuration of the current active UL BWP and the MsgA PUSCH configuration configured for the predefined/preconfigured UL BWP.

It may be specified that which MsgA PUSCH configuration should be used among the MsgA PUSCH configurations configured for the predefined/predetermined UL BWP. For example, it may be specified to use a MsgA PUSCH configuration with a low index or an MsgA PUSCH configuration with an index of a MsgA PUSCH configuration not configured for an active UL BWP.

The terminal 10 may interpret that the parameters of the MsgA PUSCH configuration configured for the predetermined/preconfigured UL BWP are parameters of the current active UL BWP, so that the parameters can be applied to the current active UL BWP, or may apply without interpretation (e.g., frequency resource location).

For some parameters, the terminal 10 may use the parameters of MsgA PUSCH configuration configured for a predefined/preconfigured UL BWP, and, other parameters may be predefined/signaled, or, for other parameters, parameters of the MsgA PUSCH configuration configured for the current active UL BWP may be used.

The terminal 10 may use resources, in the 2-step RACH procedure, that are same as the MsgA PUSCH resources of the predefined/preconfigured UL BWP in the frequency direction if the predefined/preconfigured UL BWP is completely included in the current active UL BWP in the frequency direction.

The predefined/preconfigured UL BWP may be an initial active UL BWP, an initial UL BWP, a default UL BWP, a first active UL BWP, a UL BWP used for RRC_IDLE/INACTIVE state, or any other UL BWP.

In connection with configuring the MsgA PUSCH configuration for the terminal 10, if there is no MsgA PUSCH configuration meeting the selection criteria, the terminal 10 (i) may apply the 4-step RACH procedure instead of the 2-step RACH procedure, (ii) optionally does not send the MsgA PUSCH, or (iii) may select one MsgA PUSCH configuration from one or more of the MsgA PUSCH configurations not meeting the selection criteria. A selection method may be defined when the terminal 10 selects any one of one or more MsgA PUSCH configurations that do not meet the selection criteria. For example, the definition may be based on a parameter (e.g., the one with the lowest MCS index, the one with the smallest TBS, or the one with the closest time resource position), or the definition may depend on the implementation of the terminal 10.

It should be noted that the "MsgA PUSCH configuration" in the above-described embodiments may be any set of parameters related to transmission of MsgA PUSCH. For example, parameters related to MsgA PUSCH resource notification, transmission method, transmission power control, correspondence between MsgA RACH and MsgA PUSCH, or the like may be included.

### (Device Configurations)

Next, examples of functional configurations of the terminal 10 and the base station 20 for executing the above-described processing and operation are described. The terminal 10 and the base station 20 include all the functions for executing the above-described embodiments. However, each of terminal 10 and the base station 20 may be provided with only some functions described in the embodiments. Note that the terminal 10 and the base station 20 may be collectively referred to as a communication apparatus.

### <Terminal>

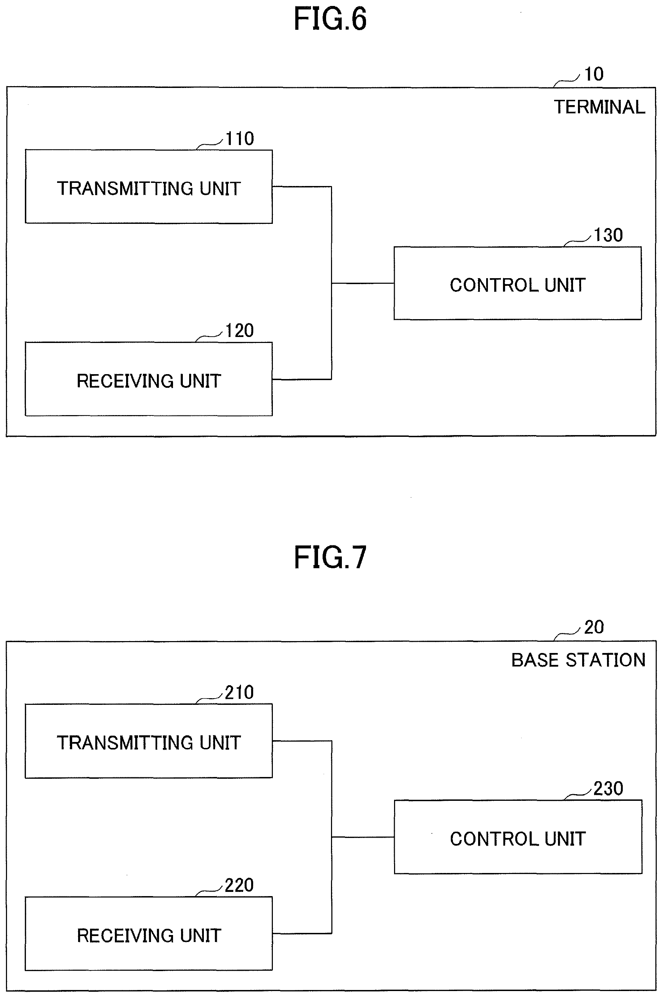

FIG. 6 is a diagram illustrating an example of a functional configuration of the terminal 10. As illustrated in FIG. 6, the terminal 10 includes a transmitting unit 110, a receiving unit 120, and a control unit 130. The functional configuration illustrated in FIG. 6 is an example. A functional division and the names of the functional units may be any division and name provided that the operation according to the embodiments can be executed. The transmitting unit 110 may be referred to as a transmitter, and the receiving unit 120 may be referred to as a receiver.

The transmitting unit 110 creates transmission from transmission data, and wirelessly transmits the transmission signal. The transmitting unit 110 can form one or a plurality of beams. The receiving unit 120 wirelessly receives various signals, and obtains a higher layer signal from the received physical layer signal. Furthermore, the receiving unit 120 includes a measurement unit that obtains received power or the like by performing a measurement of a received signal.

The control unit 130 controls the terminal 10. Note that, a function of the control unit 130 related to transmission may be included in the transmitting unit 110, and a function of the control unit 130 related to reception may be included in the receiving unit 120.

For example, in the 4-step RACH procedure, the transmitting unit 110 transmits a random access preamble. The receiving unit 120 receives a random access response from the base station 20. The control unit 130 obtains information of a radio resource for transmitting the Message 3 from the random access response. The transmitting unit 110 transmits the Message 3 to the base station 20 through the radio resource configured by the control unit 130. The receiving unit 120 receives the Message 4 from the base station 20.

In addition, for example, in the 2-step RACH procedure, the transmitting unit 110 transmits a Message A. That is, the transmitting unit 110 transmits, to the base station 20, a random access preamble in the 2-step RACH procedure, and performs transmission of data on PUSCH in the 2-step RACH procedure before receiving a message corresponding to the Message 2 in the 4-step RACH procedure. The receiving unit 120 receives a Message B.

In the 2 step RACH procedure, when the transmitting unit 110 transmits a MessageA, the control unit 130 may configure a MsgA RACH configuration in accordance with any one of the above-described proposed method. The transmitting unit 110 may perform a MsgA transmission in the 2-step RACH by using the configured MsgA RACH configuration.

### <Base Station 20>

FIG. 7 is a diagram illustrating an example of a functional configuration of the base station 20. As illustrated in FIG. 7, the base station 20 includes a transmitting unit 210, a receiving unit 220, and a control unit 230. A functional configuration illustrated in Fig. 7 is an example.

A functional division and names of the functional units may be any division and names provided that the operation according to the embodiments can be executed. Note that, the transmitting unit 210 may be referred to as a transmitter, and the receiving unit 220 may be referred to as a receiver.

The transmitting unit 210 includes a function of generating a signal to be transmitted to the terminal 10, and wirelessly transmitting the signal. The receiving unit 220 includes a function of receiving various signals transmitted from the terminal 10, and obtaining, for example, information of a higher layer from the received signals. Furthermore, the receiving unit 220 includes a measurement unit that obtains received power or the like by measuring a signal received by the receiving unit 220.

The control unit 230 controls the base station 20. Note that, a function of the control unit 230 related to transmission may be included in the transmitting unit 210, and a function of the control unit 230 related to reception may be included in the receiving unit 220.

For example, in the 4-step RACH procedure, the receiving unit 220 receives a random access preamble transmitted from the terminal 10. The transmitting unit 210 transmits a random access response to the terminal 10. The control unit 230 includes, in the random access response, information indicating a radio resource for transmitting the Message 3 by the terminal 10. The receiving unit 220 receives the Message 3 from the terminal 10 through the radio resource configured by the control unit 230. The transmitting unit 210 transmits the Message 4 to the terminal 10.

In addition, for example, in the 2-step RACH procedure, the receiving unit 220 receives the MessageA transmitted from the terminal 10. That is, the receiving unit 220 receives the random access preamble in the 2-step RACH procedure from the terminal 10, and the receiving unit 220 receives data on PUSCH in the 2-step RACH procedure before transmitting a message corresponding to the Message 2 in the 4-step RACH procedure. The transmitting unit 210 performs transmission of the Message B.

### (Hardware configuration)

In the block diagrams (FIG. 6 and FIG. 7) used for the description of the embodiments, the blocks of the functional units are illustrated. The functional blocks (configuring units) are implemented by any combination of hardware and/or software. A device of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, a wired and/or wireless manner).

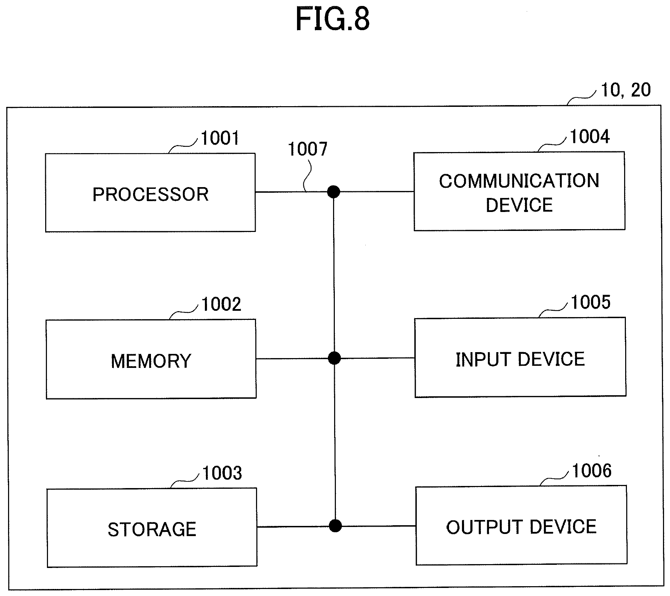

Furthermore, for example, both the terminal 10 and the base station 20 in one embodiment of the present invention may function as a computer that performs the process according to the embodiments. FIG. 8 is a diagram illustrating an example of a hardware configuration of each of the terminal 10 and the base station 20 according to the embodiments. Each of the terminal 10 and the base station 20 may be physically configured as a computer device including a processor 1001, a memory 1002, a storage 1003, a communication device 1004, an input device 1005, an output device 1006, a bus 1007, and the like.

In the following description, the term "device" may be replaced with a circuit, device, unit, or the like. The hardware configuration of each of the terminal 10 and the base station 20 may be configured to include one or more devices indicated by 1001 to 1006 illustrated in the figure or may be configured without including some devices.

Each function in each of the terminal 10 and the base station 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU: Central Processing Unit) including an interface with a peripheral device, a control device, an operation device, a register, and the like.

Furthermore, the processor 1001 reads a program (program code), a software module, or data from the storage 1003 and/or the communication device 1004 out to the memory 1002, and executes various types of processes according to them. A program causing a computer to execute at least some of the operations described in the embodiments is used as the program. For example, the transmitting unit 110, the receiving unit 120, and the control unit 130 of the terminal 10 illustrated in FIG. 6 may be implemented by a control program which is stored in the memory 1002 and operates on the processor 1001. The transmitting unit 210, the receiving unit 220, and the control unit 230 of the base station 20 illustrated in FIG. 7 may be implemented by a control program which is stored in the memory 1002 and operates on the processor 1001. Various types of processes are described to be performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present invention.

The storage 1003 is a computer-readable recording medium and may be configured with, for example, at least one of an optical disk, such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transmitting and receiving device) for performing communication between computers via a wired and/or wireless network and is also referred to as a "network device," a "network controller," a "network card," a "communication module," or the like. For example, the transmitting unit 110 and the receiving unit 120 of the terminal 10 may be implemented by the communication device 1004. Furthermore, the transmitting unit 210 and the receiving unit 220 of the base station 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected via the bus 1007 to communicate information with each other. The bus 1007 may be configured with a single bus or may be configured with different buses between the devices.

Furthermore, each of the terminal 10 and the base station 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of the embodiments)

In this specification, at least the following terminal and the following communication method are disclosed.

A terminal including a control unit that selects a set of configuration information related to a physical uplink shared channel transmission for a MessageA (MsgA PUSCH) in a two step random access procedure based on configuration information of an active uplink Bandwidth Part (BWP); and a transmitting unit that performs the MsgA PUSCH transmission by using the set of the configuration information selected by the control unit.

According to the above-described configuration, configuration information related to the MsgA PUSCH transmission can be flexibly selected based on the configuration information of the active uplink BWP.

In a case where the configuration information of the active uplink BWP includes one or more sets of configuration information related to the MsgA PUSCH transmission and no set of the one or more sets of the configuration information satisfies a selection criteria, the control unit may switch the active uplink BWP to a specified uplink BWP, and the control unit may select a set of configuration information related to a MsgA PUSCH transmission included in configuration information of the specified uplink BWP.

According to the above configuration, if the set of configuration information related to the transmission of MsgA PUSCH included in the configuration information of the active uplink BWP does not satisfy the selection criteria, for example, the set of configuration information related to the transmission of MsgA PUSCH set to the default uplink BWP can be selected, and the set of configuration information related to the transmission of MsgA PUSCH can be selected more flexibly.

In a case where the configuration information of the active uplink BWP includes one or more sets of configuration information related to the MsgA PUSCH transmission and no set of the one or more sets of the configuration information satisfies a selection criteria, the control unit may select a set of configuration information related to a MsgA PUSCH transmission in a two step random access procedure included in configuration information of a specified uplink BWP, and the transmitting unit may perform the MsgA PUSCH transmission on the active uplink BWP using the set of the configuration information selected by the control unit.

According to the above-described configuration, for example, a set of configuration information related to the transmission of MsgA PUSCH configured for the default uplink BWP can be applied to the current active uplink BWP.

In a case where the configuration information of the active uplink BWP includes only one set of the configuration information related to the MsgA PUSCH transmission, the control unit may configure another set of the configuration information related to the MsgA PUSCH transmission on the active uplink BWP using at least a part of configuration information of a specified uplink BWP.

According to the above-described configuration, for example, a set of configuration information related to the transmission of MsgA PUSCH configured for the default uplink BWP can be applied to the current active uplink BWP.

A communication method by a terminal, the communication method including selecting a set of configuration information related to a physical uplink shared channel transmission for a MessageA (MsgA PUSCH) in a two step random access procedure based on configuration information of an active uplink Bandwidth Part (BWP); and performing the MsgA PUSCH transmission using the selected set of the configuration information selected.

According to the above-described configuration, configuration information related to the MsgA PUSCH transmission can be flexibly selected based on the configuration information of the active uplink BWP.

### (Supplement of embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the terminal 10 and the base station 20 are described using the functional block diagrams, but such devices may be implemented by hardware, software, or a combination thereof. Software executed by the processor included in the terminal 10 according to the embodiment of the present invention and software executed by the processor included in the base station 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be modified in order as long as there is no contradiction. For example, the method described in this specification presents elements of various steps in an exemplary order and is not limited to a presented specific order.

In this specification, a specific action that is supposed to be performed by the base station 20 may be performed by an upper node in some cases. In the network including one or more network nodes including the base station 20, various operations performed for communication with the terminal 10 can be obviously performed by the base station 20 and/or any network node (for example, an MME, an S-GW, or the like is considered, but it is not limited thereto) other than the base station 20. The example in which the number of network nodes excluding the base station 20 is one has been described above, but a combination of a plurality of other network nodes (for example, an MME and an S-GW) may be provided.

Each aspect/embodiment described in this specification may be used alone, may be used in combination, or may be switched in association with execution.

The terminal 10 may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station 20 may also be referred to as a Node B (NB), an enhanced Node B (eNB), a base station, a gNB, or other appropriate terms, by those having skill in the art.

A bandwidth part (BWP: Bandwidth Part) (which may also be referred to as a partial bandwidth or the like) may represent a subset of consecutive common RB (common resource blocks) in a carrier for a numerology. Here, the common RB may be identified by an index of an RB relative to a common reference point of the carrier. A PRB may be defined in a BWP and may be numbered within that BWP.

BWP may include BWP for UL (UL BWP) and BWP for DL (DL BWP). For a UE, one or more BWPs may be configured in one carrier.

At least one of the configured BWPs may be active, and the UE need not assume that predetermined signals/channels are transmitted or received outside the active BWP. The terms "cell" and "carrier" in this disclosure may be replaced with "BWP."

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similar to a term "provided with (comprising)" as long as the terms are used in this specification or claims set forth below. Furthermore, the term "or" used in this specification or claims set forth below is intended not to be an exclusive OR.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the scope of the present invention defined by the claims set forth below. Accordingly, the description of this specification is intended to be exemplary and does not have any restrictive meaning to the present invention.

### LIST OF REFERENCE SYMBOLS

- 10: terminal

- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A terminal (10) comprising:
a control unit (130) configured to configure, when a set of configuration information selected based on a selection criterion is not configured in the configuration information for a message to be transmitted on a physical uplink shared channel in a two step random access procedure, predefined configuration information for the set; and
a transmitting unit (110) configured to transmit the message by using the set configured by the control unit;
wherein the predefined configuration information is configuration information for a predefined uplink Bandwidth Part.

2. The terminal according to claim 1, wherein the selection criterion includes a criterion for a size of the message.

3. A base station (20) comprising:
a control unit (230) configured to configure, when a set of configuration information selected based on a selection criterion is not configured in the configuration information for a message to be transmitted on a physical uplink shared channel in a two step random access procedure, predefined configuration information for the set; and
a receiving unit (220) configured to receive the message by using the set configured by the control unit;
wherein the predefined configuration information is configuration information for a predefined uplink Bandwidth Part.

4. A communication system comprising:
a terminal (10) according to claim 1 or 2; and
a base station (20) according to claim 3.

5. A communication method for a terminal (10) comprising:
configuring, when a set of configuration information selected based on a selection criterion is not configured in the configuration information for a message to be transmitted on a physical uplink shared channel in a two step random access procedure, predefined configuration information for the set; and
transmitting the message by using the configured set;
wherein the predefined configuration information is configuration information for a predefined uplink Bandwidth Part.

## Patentansprüche

1. Endgerät (10), umfassend:
eine Steuereinheit (130), die so konfiguriert ist, dass sie, wenn ein Satz von Konfigurationsinformationen, der basierend auf einem Auswahlkriterium ausgewählt wurde, nicht in den Konfigurationsinformationen für eine Nachricht konfiguriert ist, die auf einem physischen gemeinsam genutzten Uplink-Kanal in einem zweistufigen Direktzugriffsverfahren übertragen werden soll, vordefinierte Konfigurationsinformationen für den Satz bereitstellt; und
eine Übertragungseinheit (110), die so konfiguriert ist, dass sie die Nachricht unter Verwendung des von der Steuereinheit konfigurierten Satzes überträgt;
wobei die vordefinierten Konfigurationsinformationen Konfigurationsinformationen für einen vordefinierten Uplink-Bandbreitenteil sind.

2. Endgerät nach Anspruch 1, wobei das Auswahlkriterium ein Kriterium für eine Größe der Nachricht einschließt.

3. Basisstation (20), umfassend:
eine Steuereinheit (230), die so konfiguriert ist, dass sie, wenn ein Satz von Konfigurationsinformationen, der basierend auf einem Auswahlkriterium ausgewählt wurde, nicht in den Konfigurationsinformationen für eine Nachricht konfiguriert ist, die auf einem physischen gemeinsam genutzten Uplink-Kanal in einem zweistufigen Direktzugriffsverfahren übertragen werden soll, vordefinierte Konfigurationsinformationen für den Satz bereitstellt; und
eine Empfangseinheit (220), die so konfiguriert ist, dass sie die Nachricht unter Verwendung des von der Steuereinheit konfigurierten Satzes empfängt;
wobei die vordefinierten Konfigurationsinformationen Konfigurationsinformationen für einen vordefinierten Uplink-Bandbreitenteil sind.

4. Funkkommunikationssystem, umfassend:
ein Endgerät (10) nach Anspruch 1 oder 2; und
eine Basisstation (20) nach Anspruch 3.

5. Funkkommunikationsverfahren für ein Endgerät (10), umfassend:
wenn ein Satz von Konfigurationsinformationen, der basierend auf einem Auswahlkriterium ausgewählt wurde, nicht in den Konfigurationsinformationen für eine Nachricht konfiguriert ist, die auf einem physischen gemeinsam genutzten Uplink-Kanal in einem zweistufigen Direktzugriffsverfahren übertragen werden soll, Konfigurieren vordefinierter Konfigurationsinformationen für den Satz; und
Übertragen der Nachricht unter Verwendung des konfigurierten Satzes;
wobei die vordefinierten Konfigurationsinformationen Konfigurationsinformationen für einen vordefinierten Uplink-Bandbreitenteil sind.

## Revendications

1. Terminal (10) comprenant :
une unité (130) de commande configurée pour configurer, lorsqu'un ensemble d'informations de configuration sélectionnées sur la base d'un critère de sélection n'est pas configuré dans les informations de configuration pour un message à transmettre sur un canal partagé de liaison montante physique dans une procédure d'accès aléatoire en deux étapes, des informations de configuration prédéfinies pour l'ensemble ; et
une unité (110) de transmission configurée pour transmettre le message en utilisant l'ensemble défini par l'unité de contrôle ;
dans lequel les informations de configuration prédéfinies sont des informations de configuration pour une partie de bande passante de liaison montante prédéfinie.

2. Terminal selon la revendication 1, dans lequel le critère de sélection inclut un critère pour une taille du message.

3. Station (20) de base comprenant :
une unité (230) de commande configurée pour configurer, lorsqu'un ensemble d'informations de configuration sélectionnées sur la base d'un critère de sélection n'est pas configuré dans les informations de configuration pour un message à transmettre sur un canal partagé de liaison montante physique dans une procédure d'accès aléatoire en deux étapes, des informations de configuration prédéfinies pour l'ensemble ; et
une unité (220) de réception configurée pour recevoir le message en utilisant l'ensemble configuré par l'unité de contrôle ;
dans lequel les informations de configuration prédéfinies sont des informations de configuration pour une partie de bande passante de liaison montante prédéfinie.

4. Système de communication comprenant :
le terminal (10) selon la revendication 1 ou la revendication 2 ; et
une station (20) de base selon la revendication 3.

5. Procédé de communication pour un terminal (10) comprenant :
la configuration, lorsqu'un ensemble d'informations de configuration sélectionnées sur la base d'un critère de sélection n'est pas configuré dans les informations de configuration pour un message à transmettre sur un canal partagé de liaison montante physique dans une procédure d'accès aléatoire en deux étapes, d'informations de configuration prédéfinies pour cet ensemble ; et
la transmission du message en utilisant l'ensemble configuré ;
dans lequel les informations de configuration prédéfinies sont des informations de configuration pour une partie de bande passante de liaison montante prédéfinie.
